# EUROPÄISCHE PATENTSCHRIFT

(11) **EP 4 124 770 B1**
(45) Veröffentlichungstag und Bekanntmachung des Hinweises auf die Patenterteilung: **21.05.2025**
(21) Anmeldenummer: 22184541.5
(22) Anmeldetag: 12.07.2022
(51) Int. Cl.: F16C 32/04, D01H 4/12, F16C 39/02

(54) **AXIALLAGER UND POLSCHEIBE FÜR EIN AXIALLAGER**
AXIAL BEARING AND POLE DISC FOR AN AXIAL BEARING
PALIER DE BUTÉE ET DISQUE POLAIRE POUR PALIER DE BUTÉE

(30) Priorität: 28.07.2021 DE 102021119614
(43) Veröffentlichungstag der Anmeldung: 01.02.2023
(73) Patentinhaber: Rieter AG, 8406 Winterthur (CH)
(72) Erfinder: Schaeffler, Gernot, 73116 Waeschenbeuren (DE)
(74) Vertreter: Canzler & Bergmeier Patentanwälte Partnerschaft mbB

(56) Entgegenhaltungen:
- EP-A2- 2 090 681
- DE-A1- 10 050 694
- JP-A- H02 113 118
- US-A- 5 987 871

## Beschreibung

Die vorliegende Erfindung betrifft ein Axiallager für einen, insbesondere in einem Lagerzwickel einer Stützscheibenlagerung, axialschubfrei gelagerten Spinnrotor einer Offenend-Spinnvorrichtung, mit einer statischen Lagerkomponente, die wenigstens zwei beidseits durch ferromagnetische Polscheiben begrenzte, axial polarisierte Permanentmagnetringe aufweist, welche so in einem Lagergehäuse angeordnet sind, dass sich im Einbauzustand gleichsinnige Pole gegenüberstehen und wobei die statische Lagerkomponente insbesondere dafür vorgesehen ist, im Betrieb mit einer dynamischen Lagerkomponente zusammenzuwirken, die durch am Rotorschaft des Spinnrotors im Abstand der Polscheiben angeordnete ferromagnetische Stege gebildet ist, wobei jede Polscheibe eine im Einbauzustand der Polscheiben vertikal angeordnete Achse und eine zur vertikalen Achse orthogonal angeordnete Achse sowie eine zentrale Öffnung und einen Scheibenring aufweist, sowie ein Lagergehäuse eines Axiallagers.

Aus der EP 2090681 A2 ist ein Axiallager für einen im Lagerzwickel einer Stützscheibenlagerung axialschubfrei gelagerten Spinnrotor einer Offenend-Spinnvorrichtung bekannt. Es weist eine statische Lagerkomponente, die wenigstens zwei beidseits durch Polscheiben begrenzte, axial polarisierte Permanentmagnetringe auf, welche so in einem Lagergehäuse angeordnet sind, dass sich im Einbauzustand gleichsinnige Pole gegenüberstehen. Die statische Lagerkomponente des Axiallagers wirkt im Betrieb mit einer dynamischen Lagerkomponente zusammen, die durch am Rotorschaft des Spinnrotors im Abstand der Polscheiben angeordnete ferromagnetische Stege gebildet ist. Jede Polscheibe weist einen lichten Querschnitt auf, der im Bereich einer im Einbauzustand der Polscheiben vertikal angeordneten Achse eine größere Ausdehnung aufweist als im Bereich einer zur vertikalen Achse orthogonal angeordneten Achse.

Befindet sich der Rotorschaft des Spinnrotors in dem Axiallager, so ist der Ringspalt zwischen dem Rotorschaft und der Polscheibe in dem lichten Querschnitt in der vertikalen Achse größer als in der horizontalen Achse. In der EP 2090681 A2 heißt es dazu, dass es durch den relativ breiten Ringspalt im oberen Bereich der vertikalen Symmetrieachse zu einer deutlichen Abschwächung der Stärke der nach oben gerichteten radialen Kraftkomponente des magnetischen Axiallagers kommt, wobei die Axialsteifigkeit des Lagers aufgrund der nach wie vor relativ geringen Ringspaltbreite in den restlichen Bereichen nahezu unverändert bleibt.

Nachteilig ist es hierbei, dass die nach oben gerichtete radiale Kraftkomponente eines solchen Axiallagers häufig zu gering ist. Durch Toleranzen bei der Fertigung ist die geringfügig unterschiedliche Ringspaltbreite auch nur sehr kostenaufwändig herzustellen.

Aus der DE 100 50 694 A1 ist ein Lagergehäuse für ein Rotorschaftende eines Spinnrotorschaftes bekannt. Zur Vermeidung eines mechanischen Kontakts zwischen Stegen der dynamischen Magnetlagerkomponente des Rotorschaftes und den Polscheiben der statischen Magnetlagerkomponente ist ein Wälzlager vorgesehen, welches das Rotorschaftende des Spinnrotorschaftes mit geringem Spiel umfasst.

Die US 5 987 871 A offenbart ebenfalls ein solches Lagergehäuse. Die Lagerbaugruppe für den Spinnrotor einer Offenend-Spinnmaschine hat ein stationäres Lagerteil mit einem Permanentmagnetring, der durch beidseitige Polscheiben gebildet wird. Sie sind so montiert, dass sich gleiche Pole (N/N oder S/S) gegenüberstehen. Die Rotorwelle hat eine Endlagerzone mit einem kleineren Durchmesser als der Durchmesser der Rotorwelle. Sie hat mindestens drei ferromagnetische Ringschultern in einem Abstand zu den Polscheiben.

In der JP H02 113118 A wird für ein Magnetlager vorgeschlagen, eine starke Rückstellkraft zu erzielen, die versucht, einen schwimmenden Körper in die ursprüngliche Position zurückzuziehen, wenn sich der schwimmende Körper in die Richtung senkrecht zu einem magnetischen Fluss bewegt hat. Erzielt wird dies durch sich verjüngende Wurzeln von Magnetpolzähnen in dem magnetischen Lager, in dem mehrere gegenüberliegende Magnetpolzähne zwischen einem festen Körper und einem schwimmenden Körper vorgesehen sind. Der schwimmende Körper ist auf dem festen Körper berührungslos gelagert. Durch Verjüngungen an den jeweiligen Wurzeln der magnetischen Zähne beider gegenüberliegender Magnetpole tritt an den Wurzeln der Magnetpolzähne keine magnetische Sättigung auf, selbst wenn eine große Menge magnetischen Flusses zu den Magnetpolen fließt. An den Spitzen der Magnetpolzähne kann aber eine hohe magnetische Flussdichte erzielt werden. Wenn der schwimmende Körper in Richtung des Pfeils B senkrecht zum magnetischen Fluss PHI bewegt wurde, wird eine starke Rückstellkraft erzeugt, die versucht, den schwimmenden Körper in die ursprüngliche Position zurückzuziehen, und so kann eine hochsteife magnetische Lagervorrichtung erhalten werden. Ein Einfluss auf Radialkräfte wird bei dieser Offenbarung aber nicht beschrieben.

Aufgabe der vorliegenden Erfindung ist es, die aus dem Stand der Technik bekannten Nachteile zu beseitigen, und ein Axiallager sowie eine Polscheibe zu schaffen, welche kostengünstig herzustellen ist und eine ungleiche Verteilung der Radialkräfte erlaubt.

Die Aufgabe wird gelöst durch ein Axiallager und ein Lagergehäuse mit den Merkmalen der unabhängigen Patentansprüche.

Vorgeschlagen wird ein Axiallager für einen, insbesondere in einem Lagerzwickel einer Stützscheibenlagerung, axialschubfrei gelagerten Spinnrotor einer Offenend-Spinnvorrichtung. Das Axiallager weist eine statische Lagerkomponente auf, die wenigstens zwei beidseits durch ferromagnetische Polscheiben begrenzte, axial polarisierte Permanentmagnetringe umfasst. Die Permanentmagnetringe sind so in einem Lagergehäuse angeordnet, dass sich im Einbauzustand gleichsinnige Pole, also N/N oder S/S, gegenüberstehen. Das Lagergehäuse ist aus einem nicht-ferromagnetischen Material, beispielsweise aus Kunststoff oder aus Messing, hergestellt. Das Axiallager mit seiner statischen Lagerkomponente ist insbesondere dafür vorgesehen im Betrieb mit einer dynamischen Lagerkomponente zusammenzuwirken, die durch am Rotorschaft des Spinnrotors im Abstand der Polscheiben angeordnete ferromagnetische Stege gebildet ist. Jede Polscheibe weist eine im Einbauzustand der Polscheiben vertikal angeordnete Achse und eine zur vertikalen Achse orthogonal angeordnete Achse sowie eine zentrale Öffnung und einen Scheibenring auf. Der Scheibenring umgibt die zentrale Öffnung. Die zentrale Öffnung ist vorzugsweise kreisförmig, kann aber auch in ihrer vertikalen oder horizontalen Ausrichtung unterschiedlich groß sein. Erfindungsgemäß weist der Scheibenring in der vertikalen Achse am inneren, an die zentrale Öffnung angrenzenden Umfang eine sichelförmige, keilförmige und/oder trapezförmige Fase und/oder ein nicht-ferromagnetisches Material auf.

Durch die Anordnung der sichelförmigen, keilförmigen und/oder trapezförmigen Fase und/oder des nicht-ferromagnetischen Materials an der Polscheibe wird die Radialkraft des Axiallagers im Bereich der Fase bzw. des nicht-ferromagnetischen Materials gegenüber den anderen Bereichen reduziert. Die Radialkraft des Axiallagers kann damit durch die Gestaltung der Polscheibe und die Anordnung der Fase bzw. des nicht ferromagnetischen Materials am Umfang des Axiallagers gezielt beeinflusst werden. Die Herstellung einer derartigen Polscheibe ist auch aufgrund der geringeren Toleranzen kostengünstig. Die Fase reduziert die Dicke der Polscheibe im Bereich der Öffnung. Sie zieht sich beispielsweise bis zu 3 Millimeter in den Scheibenring hinein. Hierdurch wird die Radialkraft des Axiallagers an dieser Stelle reduziert. Je flacher die Fase ist, d. h. je weiter sie sich in den Scheibenring hineinzieht, desto geringer ist die Radialkraft an dieser Stelle. Gleiches gilt für das nicht-ferromagnetische Material. An der Stelle des nicht-ferromagnetischen Materials ist die Radialkraft reduziert. Je weiter sich das nicht-ferromagnetische Material ausgehend von der Öffnung in den Scheibenring hinein erstreckt, desto geringer ist die Radialkraft an dieser Stelle.

Die Form der Fase ist erfindungsgemäß sichelförmig, keilförmig oder trapezförmig, je nachdem, wie die radiale Kraft beeinflusst werden soll. Auch hier kann die entsprechende Form einseitig oder beidseitig der Polscheibe angeordnet sein.

Vorteile bringt es mit sich, wenn die Fase einseitig und/oder doppelseitig ist. Die Fase kann einseitig oder doppelseitig an der Polscheibe angeordnet sein. Bei einer einseitigen Fase ist die Polscheibe im Bereich der Öffnung nur an einer Oberfläche der Polscheibe abgeflacht. Die Dicke der Polscheibe ist damit einseitig reduziert. Die Fase kann aber auch beidseitig vorgesehen sein, sodass die Polscheibe von beiden Oberflächen her in ihrer Dicke reduziert ist. An der dünnsten Stelle der Polscheibe kann diese spitz zulaufen, es kann aber auch beispielsweise ein Steg mit einer Dicke von 0,1-0,9 Millimeter vorhanden sein.

Auch ist es von Vorteil, wenn die Höhe der zentralen Öffnung in Richtung der vertikalen Achse ungleich der Breite der zentralen Öffnung in Richtung der horizontalen Achse ist. So ist es möglich, dass die Höhe in Richtung der vertikalen Achse geringer als die Höhe in Richtung der horizontalen Achse ist. Dies bietet sich vor allem dann an, wenn die Polscheibe gleichzeitig einen Anlaufschutz für den Rotorschaft bildet. Insbesondere, wenn Polscheibe einen Bereich am Scheibenring mit einem nicht-ferromagnetischen Material aufweist, kann dieser nicht nur zur Reduzierung der Radialkräfte dienen, sondern auch einen Anlaufschutz ausbilden, welcher verhindert, dass der Rotorschaft direkten Kontakt mit dem ferromagnetischen Material der Polscheiben erhalten kann.

Vorteile bringt es mit sich, wenn die Fase und/oder das nicht-ferromagnetische Material im Einbauzustand der Polscheiben in der unteren und/oder oberen Hälfte des Scheibenrings ausgebildet ist. Insbesondere bei Verwendung eines Stützscheibenlagers mit einem Lagerzwickel zur radialen Lagerung des Spinnrotors kann es wichtig sein, dass die in vertikaler Richtung vorliegende Radialkraft des Axiallagers reduziert ist, um zu verhindern, dass der Rotorschaft des Spinnrotors durch die Radialkraft des Axiallagers die Polscheiben kontaktiert, wenn die Anpressung des Spinnrotors in den Lagerzwickel geringer ist.

Vorteilhaft ist es zudem, wenn das nicht-ferromagnetische Material ein Gleitleitlagerwerkstoff, insbesondere Kunststoff oder Keramik ist. Insbesondere, wenn davon ausgegangen wird, dass das nicht-ferromagnetische Material gleichzeitig einen Anlaufschutz für den Spinnrotor ausbildet, bewirkt der Gleitlagerwerkstoff, dass der Anlaufschutz eine hohe Lebensdauer hat. Der an die Stahlplatte der Polscheibe angebrachte, insbesondere angespritzte Kunststoff kann so auch noch zusätzlich als Niederhalter dienen, der oberhalb der Rotorwelle einen sogar geringeren Abstand zur Rotorwelle wie der untere Stahlteil aufweist.

Ebenso ist es vorteilhaft, wenn das nicht-ferromagnetische Material elastisch ist und/oder elastisch gelagert ist. Durch die Elastizität des nicht ferromagnetischen Materials oder dessen Lagerung wird auch der Schaft des Spinnrotors geschont. So wird insbesondere beim Einschieben und Herausziehen des Rotorschaft aus dem Axiallager verhindert, dass die Polscheiben oder der Rotorschaft beschädigt werden, da das nicht-ferromagnetische Material entsprechend ausweichen kann. Auch Dickenunterschiede werden dem elastischen Element, beispielsweise einem Federelement, ausgeglichen. Das elastische Element kann z.B. einen Teil eines weichen O-Ringes umfassen.

Vorteilhaft ist es zudem, wenn der Scheibenring form- und/oder kraftschlüssig verbunden ist. Damit kann die Polscheibe außerhalb des Axiallagers hergestellt und bei der Montage des Axiallagers in dieses eingesetzt werden. Nicht-ferromagnetisches und ferromagnetisches Material können auch zweiteilig ausgeführt werden. Sie werden dann zusammengesteckt, in dem Lagergehäuse aufgenommen und in ihm axial verspannt.

Vorteile bringt es zudem mit sich, wenn der Scheibenring in Richtung der vertikalen Achse unterbrochen ist. Auch eine derartige Unterbrechung des Scheibenrings dient der Reduzierung der Radialkraft des Axiallagers. Eine Dosierung der wirkenden Radialkraft kann durch die Breite der Unterbrechung des Scheibenrings erfolgen.

Eine erfindungsgemäße Polscheibe für ein zuvor beschriebenes Axiallager umfasst eine im Einbauzustand der Polscheibe vertikal angeordnete Achse und eine zur vertikalen Achse orthogonal angeordnete Achse sowie eine zentrale Öffnung und einen Scheibenring. Der Scheibenring weist in der vertikalen Achse am inneren, an die zentrale Öffnung angrenzenden Umfang eine Fase und/oder ein nicht-ferromagnetisches Material auf. Durch die Fase und/ oder das nicht-ferromagnetische Material am Scheibenring der Polscheibe wird die Stärke der Radialkraft in dem Axiallager in dem entsprechenden Bereich beeinflusst bzw. gegenüber der restlichen Polscheibe reduziert. Die Radialkraft kann somit gezielt am Umfang der Polscheibe verringert werden. Dies ist beispielsweise vorteilhaft, wenn die Kraft des Radiallagers, welches den darin gelagerten Rotorschaft aufnimmt, zumindest in Teilen der Anwendung unterschiedlich groß ist und deshalb zu befürchten ist, dass der Rotorschaft sich selbst oder das Axiallager beschädigen könnte. Erfindungsgemäß ist die Fase sichelförmig, keilförmig und/oder trapezförmig.

Vorteilhaft ist es, wenn die Fase einseitig und/oder doppelseitig ist. Sowohl die Herstellung der Polscheibe als auch die Wirkungsweise der Polscheibe in Bezug auf die Radialkraft des Axiallagers, in welchen die Polscheibe eingesetzt ist, können hierdurch beeinflusst werden.

Auch ist es von Vorteil, wenn die Höhe der zentralen Öffnung in Richtung der vertikalen Achse ungleich der Breite der zentralen Öffnung in Richtung der horizontalen Achse ist. Durch eine unterschiedliche Höhe der zentralen Öffnung in Richtung der beiden Achsen wird auch wiederum die Stärke der Radialkraft beeinflusst. Je größer der entstehende Ringspalt zwischen Polscheibe und Rotorschaft ist, desto geringer ist die Radialkraft. Ist andererseits die zentrale Öffnung durch das nicht-ferromagnetische Material reduziert, so dient dieses als Anlaufschutz für den Rotorschaft.

Vorteile bringt es mit sich, wenn die Fase und/oder das nicht-ferromagnetische Material im Einbauzustand der Polscheiben in der unteren und/oder oberen Hälfte des Scheibenrings ausgebildet ist. Dies ist besonders bei der Lagerung des Rotorschafts in einem Lagerzwickel einer Stützscheibenlagerung von Vorteil, bei welcher zu erwarten ist, dass je nach Betriebszustand der Offenend-Spinnvorrichtung unterschiedliche radiale Lagerkräfte in vertikaler Richtung entstehen können.

Vorteilhaft ist es, wenn das nicht-ferromagnetische Material ein Gleitleitlagerwerkstoff, insbesondere Kunststoff oder Keramik ist. Hiermit wird der Verschleiß der Polscheibe ebenso wie der Verschleiß des Rotorschaft reduziert.

Auch ist es vorteilhaft, wenn das nicht-ferromagnetische Material elastisch ist und/oder elastisch gelagert ist. Nachdem die Öffnung der Polscheibe den kleinsten Durchgangsquerschnitt für den Rotorschaft durch das Axiallager bildet, wird durch die elastische Lagerung bzw. das elastische Material des nicht-ferromagnetischen Teils der Polscheibe ein Schutz für die Polscheibe und den Rotorschaft gebildet.

Ebenso ist es vorteilhaft, wenn das nicht-ferromagnetische Material mit dem ferromagnetischen Material des Scheibenrings form- und/oder kraftschlüssig verbunden ist. Damit ist die Herstellung der Polscheibe und Montage der Polscheibe in dem Axiallager vereinfacht.

Des Weiteren ist es vorteilhaft, wenn der Scheibenring in Richtung der vertikalen Achse eine Unterbrechung aufweist. Mit einer derartigen Unterbrechung des Scheibenrings die Radialkraft in dem Axiallager zusätzlich beeinflusst werden.

Ein erfindungsgemäßes Lagergehäuse eines Axiallagers weist wenigstens zwei beidseits durch ferromagnetische Polscheiben begrenzte, axial polarisierte Permanentmagnetringe auf, welche so in einem Lagergehäuse angeordnet sind, dass sich im Einbauzustand gleichsinnige Pole gegenüberstehen. Jede der Polscheiben umfasst eine vertikal angeordnete Achse und eine zur vertikalen Achse orthogonal angeordnete Achse sowie eine zentrale Öffnung und einen Scheibenring. Der Scheibenring weist in der vertikalen Achse am inneren, an die zentrale Öffnung angrenzenden Umfang eine sichelförmige, keilförmige und/oder trapezförmige Fase und/oder ein nicht-ferromagnetisches Material auf. Im Übrigen ist die Polscheibe vorteilhafterweise entsprechend der vorherigen Beschreibung ausgebildet.

Die Vorrichtung ist gemäß der vorangegangenen Beschreibung ausgebildet, wobei die genannten Merkmale einzeln oder in beliebiger Kombination vorhanden sein können.

Weitere Vorteile der Erfindung sind in den nachfolgenden Ausführungsbeispielen beschrieben. Es zeigt:
- **Figur 1**: eine Seitenansicht einer Lagerung eines Spinnrotors einer Offenend-Spinnvorrichtung,
- **Figur 2**: eine erfindungsgemäße Polscheibe mit einer Fase,
- **Figur 3a - 3c**: Schnitte durch erfindungsgemäße Polscheiben mit einer Fase,
- **Figur 4**: eine erfindungsgemäße Polscheibe mit einer Fase und einer Unterbrechung des Scheibenrings,
- **Figur 5**: eine erfindungsgemäße Polscheibe mit einem Einsatz aus nicht-ferromagnetischem Material,
- **Figur 6**: eine erfindungsgemäße Polscheibe mit einem weiteren Einsatz aus nicht-ferromagnetischem Material,
- **Figur 7**: eine erfindungsgemäße Polscheibe mit einer Fase und einem Einsatz aus nicht-ferromagnetischem Material und
- **Figur 8**: einen Schnitt durch ein Axiallager mit Polscheiben mit nicht-ferromagnetischem Material und
- **Figur 9**: eine erfindungsgemäße Polscheibe mit einer Fase und einem Einsatz aus nicht-ferromagnetischem Material.

Bei der nachfolgenden Beschreibung der Ausführungsbeispiele werden für Merkmale, die in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise den vorstehend bereits beschriebenen Merkmalen.

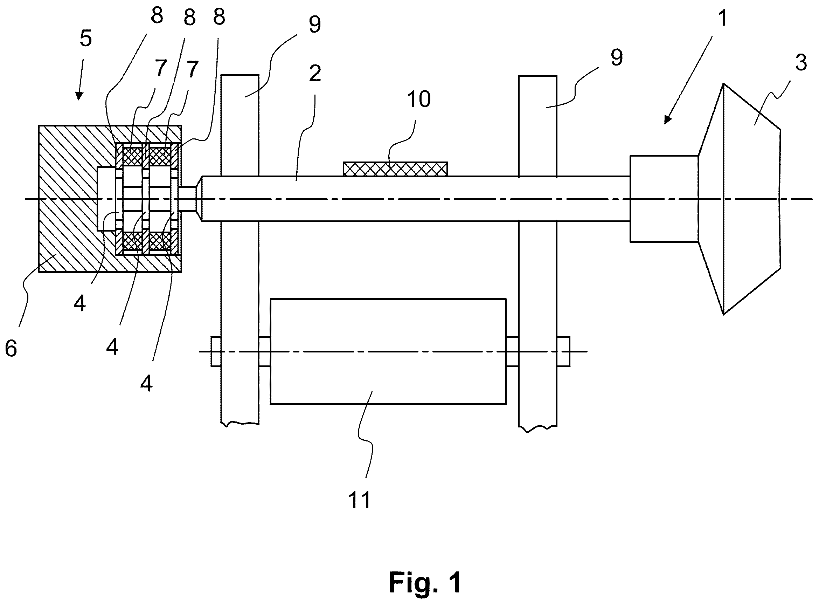

Figur 1 zeigt schematisch eine Seitenansicht einer Lagerung eines Spinnrotors 1 einer Offenend-Spinnvorrichtung. Der Spinnrotor 1 umfasst einen Rotorschaft 2, an dessen einem Ende ein Rotortopf 3 und an dessen anderem Ende ferromagnetische Stege 4 angeordnet sind. Die Stege 4 weisen jeweils einen Abstand voneinander auf und bilden im Betrieb eine dynamische Lagerkomponente eines in einem Längsschnitt dargestellten Axiallagers 5. Eine statische Lagerkomponente des Axiallagers 5 ist durch ein Lagergehäuse 6 gebildet. In dem Lagergehäuse 6 sind zwei Permanentmagnetringe 7 angeordnet, welche sich mit ihren gegensinnigen Polen gegenüberstehen. Die beiden Permanentmagnetringe 7 sind beidseits durch ferromagnetische Polscheiben 8 begrenzt. Die Permanentmagnetringe 7 und die Polscheiben 8 sind in dem Lagergehäuse 6 fixiert. Das Axiallager 5 sorgt durch die Kräfte der Permanentmagnetringe 7 für eine axiale Positionierung des Rotorschafts 2.

Die Stege 4 des Rotorschaft 2 sind beispielsweise durch Einstiche in den Rotorschaft 2 gebildet, welche mit nichtmagnetischem Material gefüllt sein können. Die Stege 4 weisen vorzugsweise die gleiche Breite auf, wie die Polscheiben 8.

Die Polscheiben 8 bestehen aus einem ferromagnetischen Material, vorzugsweise aus Stahl. Das Lagergehäuse 6 ist aus nicht-ferromagnetischen Material, beispielsweise aus Aluminium oder aus Kunststoff, gefertigt.

Bei dem magnetischen Axiallager 5 verläuft der magnetische Fluss von dem Permanentmagnetring 7 über die Polscheibe 8 zu dem nächstliegenden Steg 4 und über den benachbarten Steg 4 zurück auf die benachbarte Polscheibe 8 und wieder zurück in den Permanentmagnetring 7. Die Magnetlinien haben das Bestreben sich zu verkürzen. In axialer Richtung wird der Rotorschaft 2 so verschoben, dass die Polscheiben 8 in der Flucht zu den Stegen 4 des Rotorschafts 2 stehen und so die Magnetlinien am kürzesten sind.

Eine radiale Lagerung des Rotorschafts 2 erfolgt mit zwei Paaren aus Stützscheiben 9, welche einen Lagerzwickel bilden, in dem der Rotorschaft 2 drehbar aufliegt. In der Darstellung der Figur 1 sind lediglich zwei Stützscheiben 9 der beiden Paare dargestellt. Zwischen den Stützscheiben 9 ist ein maschinenlanger Antriebsriemen 10 angeordnet, welcher mit einer nicht dargestellten Andrückrolle auf den Rotorschaft 2 gedrückt ist und den Spinnrotor 1 in Drehbewegung versetzt. Die Stützscheiben 9 sind in einem Stützscheibenlager 11 drehbar gelagert. In radialer Richtung wird der Rotorschaft 2 von den Stützscheiben 9 und dem auf die den Rotorschaft 2 drückenden Antriebsriemen 10 daran gehindert, aus dem mittigen Lagerzentrum auszuweichen.

Die Magnetkräfte des Axiallagers 5 sind umso stärker, je näher die Polscheiben 8 zu den Stegen 4 stehen. Bei fehlendem Riemenandruck würden die Permanentmagnetringe 7 den Rotorschaft 2 senkrecht nach oben auf die Polscheiben 8 ziehen. Die Magnetkräfte wären dann größer als der wirkende Riemenandruck. Der Rotorschaft 2 könnte so vom Antriebsriemen 10 nicht mehr in das Lagerzentrum gedrückt werden. Damit dies nicht geschehen kann, wird häufig ein Anschlag vorgesehen, der das verhindert. Um ein Abheben des Rotorschafts 2 von den Stützscheiben 9 möglichst zu vermeiden, sollten die Radialkräfte in Richtung Antriebsriemen 10 eher niedrig sein. Beispielsweise bei einem größeren Abstand des Stegs 4 zu der Polscheibe 8 an der Oberseite des Rotorschaft 2, an welchem der Antriebsriemen 10 angreift, wird die nach oben wirkende Radialkraft reduziert. Die Axialsteifigkeit des Axiallagers 5 bleibt jedoch im Wesentlichen erhalten.

Die vorliegende Erfindung geht von der bekannten Erkenntnis weg, dass ein größerer Abstand der Polscheibe 8 von dem Steg 4 die radialen Kräfte reduziert. Hierfür werden Polscheiben 8, wie nachfolgend beschrieben, verwendet. Diese neuartigen Polscheiben 8 reduzieren die radialen Kräfte, ohne dass zwangsläufig der Abstand der Polscheibe 8 von dem Steg 4 vergrößert werden muss. Die wirkende Radialkraft wird reduziert, indem die Polscheibe 8 an der entsprechenden Stelle in ihrer Dicke geschwächt wird. Dies geschieht durch eine Fase 12 und/oder durch ein nicht-ferromagnetisches Material, welches das ferromagnetische Material der übrigen Polscheibe 8 ersetzt.

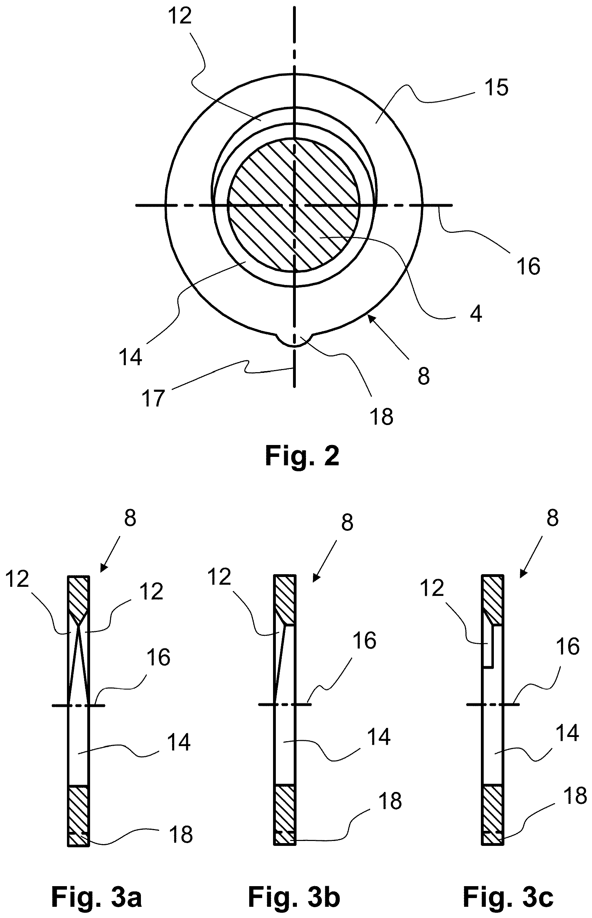

Figur 2 zeigt eine erfindungsgemäße Polscheibe 8 mit einer Fase 12. In einer zentralen Öffnung 14 ist der Steg 4 des Rotorschafts 2 angeordnet, sodass ein ringförmiger Spalt zwischen dem Steg 4 und einem Scheibenring 15 der Polscheibe 8 frei ist. Die Polscheibe 8 weist eine in Einbaulage horizontale Achse 16 und vertikale Achse 17 auf. In Richtung der vertikalen Achse 17 ist im oberen Bereich des Scheibenrings 15 die Fase 12 angeordnet. Die Fase 12 ist hier sichelförmig ausgestaltet, sodass die Radialkraft entlang der vertikalen Achse 17 am geringsten ist und allmählich bis hin zur horizontalen Achse 16 zunimmt. Um den Einbau der Polscheibe 8 in dem Axiallager 5 positionsgenau durchführen zu können, weist sie an ihrem unteren Ende einen Vorsprung 18 auf, welcher in dem Lagergehäuse 6 des Axiallagers 5 in eine Nut eingeführt werden kann.

Durch die Fase 12 am oberen inneren Umfang des Scheibenrings 15 wird die Radialkraft auf den Steg 4 und damit auf den Rotorschaft 2 reduziert, obwohl die zentrale Öffnung 14 und der Steg 4 kreisrund sind und einen gleichmäßigen Ringspalt zwischen zentralem Steg 4 und dem inneren Umfang des Scheibenrings 15 bilden. Durch die Fase 12 ist dennoch die Gefahr eines Abhebens des Rotorschafts 2 aus dem Lagerzwickel der Stützscheiben 9 vermindert.

Figur 3a und 3b zeigen Schnitte durch erfindungsgemäße Polscheiben 8 mit Fasen 12, wie sie in Figur 2 in der Draufsicht zu sehen ist. In Figur 3a ist eine doppelseitige Fase 12 dargestellt. Dies bedeutet, dass die Dicke der Polscheibe 8 von beiden Seiten her gleichmäßig reduziert ist, sodass im Querschnitt ein spitz zulaufendes Dreieck entsteht. Alternativ wäre es auch möglich, dass ein Trapez aus den beiden Phasen gebildet wird, wobei an der schmalsten Stelle weiterhin eine gewisse Dicke der Polscheibe 8 vorhanden ist. Je nach gewünschter Reduzierung der Radialkraft kann die Fase 12 bzw. die verbleibende Wandstärke der Polscheibe 8 variiert werden. Die Fase 12 läuft zur horizontalen Achse 16 hin allmählich aus.

In Figur 3b ist eine ähnliche Polscheibe 8 im Querschnitt dargestellt. Hier ist die Fase 12 nur einseitig angeordnet. Die Polscheibe 8 ist in ihrer Dicke dementsprechend weniger stark reduziert. Auch hier läuft die Fase 12 allmählich zur horizontalen Achse 16 hin aus. Sie könnte allerdings beispielsweise auch keilförmig ausgebildet sein, sodass die Schwächung der Polscheibe 8 im Bereich der Fase 12 gleichmäßig ist. Dies ist in Figur 3c dargestellt.

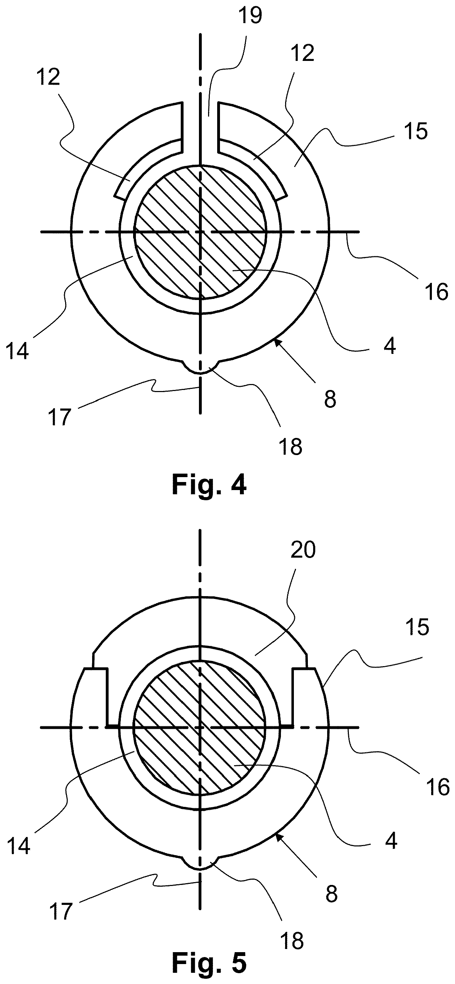

Figur 4 zeigt eine Draufsicht auf eine Polscheibe 8 mit einer keilförmigen Fase 12 und einer Unterbrechung 19. Der Scheibenring 15 ist dementsprechend nicht durchgehend ausgebildet. Im Bereich der Unterbrechung 19 sind die Radialkräfte stark reduziert, während sie im Bereich der Fase 12 wieder etwas stärker wirken.

In Figur 5 ist eine Polscheibe 8 mit einem Einsatz 20 dargestellt. Der Einsatz 20 ist aus nicht-ferromagnetischem Material, beispielsweise Aluminium oder Kunststoff, hergestellt. Der Einsatz 20 ist im vorliegenden Ausführungsbeispiel kraftschlüssig mit der restlichen Polscheibe 8 verbunden. Er kann entweder angespritzt bzw. eingegossen sein oder auch beispielsweise geklebt sein. Im Bereich des Einsatzes 20 sind die radialen Kräfte des Axiallagers sehr stark oder sogar vollständig reduziert.

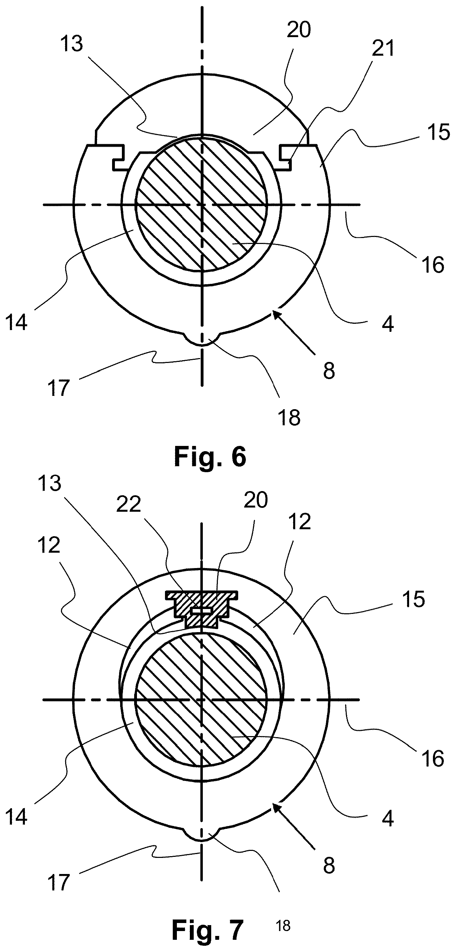

Figur 6 zeigt ähnlich wie in Figur 5 eine Polscheibe 8 mit einem Einsatz 20. Der Einsatz 20 ist formschlüssig mit der Polscheibe 8 mittels Krallen 21 verbunden. Die Krallen 21 können beispielsweise mit der restlichen Polscheibe 8 verklippst sein. Der Einsatz 20 reduziert den freien Ringspalt zwischen dem Steg 4 und dem inneren Umfang der Polscheibe 8. Die Höhe der zentralen Öffnung 14 ist hierbei somit in Richtung der vertikalen Achse 17 geringer als in Richtung der horizontalen Achse 16. Durch den so gestalteten Einsatz 20 ist ein Anlaufschutz 13 für den Steg 4 integriert. Falls der Steg 4 bzw. der Rotorschaft 2 aus der zentralen Lage nach oben bewegt wird, kontaktiert er den Einsatz 20 am Anlaufschutz 13. Hierdurch wird jedenfalls vermieden, dass ein leitender Kontakt zwischen dem Steg 4 und der Polscheibe 8 erfolgt. Ist der Einsatz 20 aus einem Gleitlagerwerkstoff hergestellt, so ist auch gewährleistet, dass auch bei häufigerem Kontakt kein übermäßiger Verschleiß zu erwarten ist

Figur 7 zeigt eine Draufsicht auf eine Polscheibe 8 mit einer Fase 12. Im Bereich der vertikalen Achse 17 ist ein weiterer Einsatz 20 angeordnet. Der Einsatz 20 ist formschlüssig an der Polscheibe 7 befestigt. Er weist eine Aussparung 22 auf, wodurch er elastisch ausgebildet ist. Bei einem Kontaktieren des Stegs 4 mit dem Einsatz 20 gibt der Einsatz 20 elastisch nach, sodass der Steg 4 bzw. der Rotorschaft 2 in seiner Auslenkung gebremst wird und in die zentrale Ausgangslage zurückgeführt werden kann.

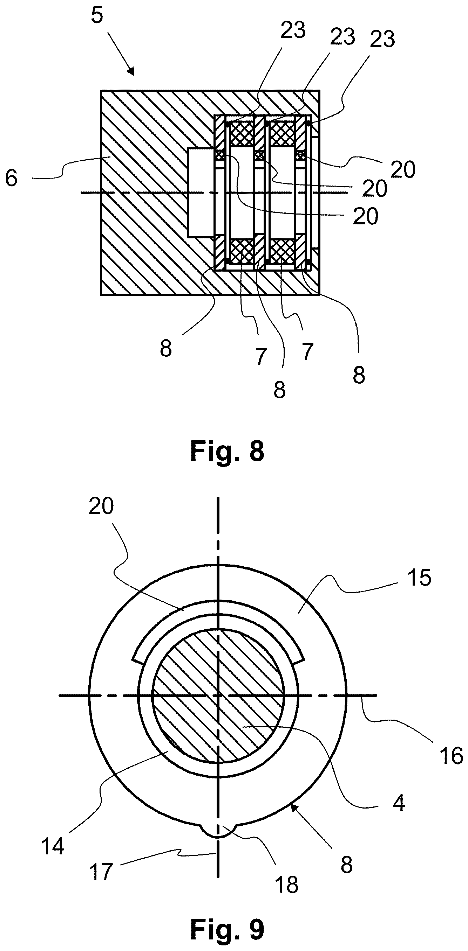

In Figur 8 ist ein Schnitt durch ein Axiallager 5 mit Polscheiben 8 mit nicht-ferromagnetischem Material dargestellt. Das nicht-ferromagnetische Material ist in einem Teilbereich des inneren Umfangs der Polscheibe 8 angeordnet (siehe Figur 9). Darüber hinaus ist bei der Anordnung der Polscheiben 8 in dem Lagergehäuse 6 zu erkennen, dass zwischen den Polscheiben 8 und den Permanentmagnetringen 7 bzw. der einen äußeren Polscheibe 8 und dem Lagergehäuse 6 ein elastischer Ring 23 angeordnet ist. Hierdurch ist die Polscheibe 8 in der Lage bei einem axialen Stoß ausweichen zu können. Dieser Stoß kann entstehen bei einem Einsetzen oder Herausnehmen des Rotorschafts 2 bzw. der Stege 4 in das bzw. aus dem Lagergehäuse 6 des Axiallagers 5. Hierdurch wird einer Beschädigung der Polscheiben 8 vorgebeugt.

In Figur 9 ist eine Polscheibe 8 zu erkennen, welche am inneren Umfang des Scheibenrings 15 einen Einsatz 20 aufweist. Einsatz 20 und innerer Umfang des Scheibenrings 15 gehen bündig ineinander über, sodass die kreisrunde zentrale Öffnung 14 bestehen bleibt. Auch hierdurch ist eine Reduzierung der Radialkraft in Richtung der vertikalen Achse 17 ermöglicht.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Spinnrotor
- 2: Rotorschaft
- 3: Rotortopf
- 4: Steg
- 5: Axiallager
- 6: Lagergehäuse
- 7: Permanentmagnetring
- 8: Polscheibe
- 9: Stützscheibe
- 10: Antriebsriemen
- 11: Stützscheibenlager
- 12: Fase
- 13: Anlaufschutz
- 14: zentrale Öffnung
- 15: Scheibenring
- 16: horizontale Achse
- 17: vertikale Achse
- 18: Vorsprung
- 19: Unterbrechung
- 20: Einsatz
- 21: Kralle
- 22: Aussparung
- 23: Ring

## Patentansprüche

1. Axiallager für einen, insbesondere in einem Lagerzwickel einer Stützscheibenlagerung, axialschubfrei gelagerten Spinnrotor (1) einer Offenend-Spinnvorrichtung,
mit einer statischen Lagerkomponente, die wenigstens zwei beidseits durch ferromagnetische Polscheiben (8) begrenzte, axial polarisierte Permanentmagnetringe (7) aufweist, welche so in einem Lagergehäuse (6) angeordnet sind, dass sich im Einbauzustand gleichsinnige Pole gegenüberstehen und
wobei die statische Lagerkomponente insbesondere dafür vorgesehen ist, im Betrieb mit einer dynamischen Lagerkomponente zusammenzuwirken, die durch am Rotorschaft (2) des Spinnrotors (1) im Abstand der Polscheiben (8) angeordnete ferromagnetische Stege (4) gebildet ist,
wobei jede Polscheibe (8) eine im Einbauzustand der Polscheiben (8) vertikal angeordnete Achse (17) und eine zur vertikalen Achse (17) orthogonal angeordnete Achse (16) sowie eine zentrale Öffnung (14) und einen Scheibenring (15) aufweist,
**dadurch gekennzeichnet, dass**
der Scheibenring (15) in der vertikalen Achse (17) am inneren, an die zentrale Öffnung (14) angrenzenden Umfang
- eine sichelförmige, keilförmige und/oder trapezförmige Fase (12)
und/oder
- ein nicht-ferromagnetisches Material aufweist.

2. Axiallager nach dem vorherigen Anspruch, **dadurch gekennzeichnet, dass** die Fase (12) einseitig und/oder doppelseitig ist.

3. Axiallager nach einem oder mehreren der vorherigen Ansprüche, **dadurch gekennzeichnet, dass** die Höhe der zentralen Öffnung (14) in Richtung der vertikalen Achse ungleich der Breite der zentralen Öffnung (14) in Richtung der horizontalen Achse ist.

4. Axiallager nach einem oder mehreren der vorherigen Ansprüche, **dadurch gekennzeichnet, dass** die Fase (12) und/oder das nicht-ferromagnetische Material im Einbauzustand der Polscheiben (8) in der unteren und/oder oberen Hälfte des Scheibenrings (15) ausgebildet ist.

5. Axiallager nach einem oder mehreren der vorherigen Ansprüche, **dadurch gekennzeichnet, dass** das nicht-ferromagnetische Material ein Gleitleitlagerwerkstoff, insbesondere Kunststoff oder Keramik ist.

6. Axiallager nach einem oder mehreren der vorherigen Ansprüche, **dadurch gekennzeichnet, dass** das nicht-ferromagnetische Material elastisch und/oder elastisch gelagert ist.

7. Axiallager nach einem oder mehreren der vorherigen Ansprüche, **dadurch gekennzeichnet, dass** der Scheibenring (15) in Richtung der vertikalen Achse (17) eine Unterbrechung (19) aufweist.

8. Polscheibe in einem Axiallager nach einem oder mehreren der vorherigen Ansprüche, **dadurch gekennzeichnet, dass** das nicht-ferromagnetische Material mit dem ferromagnetischen Material des Scheibenrings (15) form- und/oder kraftschlüssig verbunden ist.

9. Lagergehäuse eines Axiallagers (5) mit wenigstens zwei beidseits durch ferromagnetische Polscheiben (8) begrenzten, axial polarisierten Permanentmagnetringen (7), welche so in einem Lagergehäuse (6) angeordnet sind, dass sich im Einbauzustand gleichsinnige Pole gegenüberstehen und jede der Polscheiben (8) eine vertikal angeordnete Achse (17) und eine zur vertikalen Achse (17) orthogonal angeordnete Achse (16) sowie eine zentrale Öffnung (14) und einen Scheibenring (15) aufweist, gemäß einem oder mehreren der vorherigen Ansprüchen, **dadurch gekennzeichnet, dass** der Scheibenring (15) in der vertikalen Achse (17) am inneren, an die zentrale Öffnung (14) angrenzenden Umfang
- eine sichelförmige, keilförmige und/oder trapezförmige Fase (12)
und/oder
- ein nicht-ferromagnetisches Material aufweist.

## Claims

1. Axial bearing for a spinning rotor (1) of an open end spinning device which is mounted without axial thrust, in particular in a bearing gusset of a support disc bearing,
having a static bearing component which has at least two axially polarized permanent magnet rings (7) which are delimited on both sides by ferromagnetic pole discs (8) and which are arranged in a bearing housing (6) in such a way that poles in the same direction are opposite one another in the installed state, and
wherein the static bearing component is provided, in particular, to interact during operation with a dynamic bearing component which is formed by ferromagnetic links (4) which are arranged on the rotor shaft (2) of the spinning rotor (1) at a distance from the pole discs (8), wherein each pole disc (8) has an axis (17) which is arranged vertically in the installed state of the pole discs (8) and an axis (16) which is arranged orthogonally with respect to the vertical axis (17), and a central opening (14) and a disc ring (15),
**characterized in that**
the disc ring (15) has, in the vertical axis (17), on the inner circumference which adjoins the central opening (14)
- a sickle-shaped, wedge-shaped and/or trapezoidal-shaped bevel (12)
and/or
- a non-ferromagnetic material.

2. Axial bearing according to the preceding claim, **characterized in that** the bevel (12) is single-sided and/or double-sided.

3. Axial bearing according to one or more of the preceding claims, **characterized in that** the height of the central opening (14) in the direction of the vertical axis is not equal to the width of the central opening (14) in the direction of the horizontal axis.

4. Axial bearing according to one or more of the preceding claims, **characterized in that** the bevel (12) and/or the non-ferromagnetic material is/are formed in the lower and/or upper half of the disc ring (15) in the installed state of the pole discs (8).

5. Axial bearing according to one or more of the preceding claims, **characterized in that** the non-ferromagnetic material is a sliding bearing material, in particular plastics or ceramics.

6. Axial bearing according to one or more of the preceding claims, **characterized in that** the non-ferromagnetic material is elastically and/or elastically mounted.

7. Axial bearing according to one or more of the preceding claims, **characterized in that** the disc ring (15) has an interruption (19) in the direction of the vertical axis (17).

8. Pole disc in an axial bearing according to one or more of the preceding claims, **characterized in that** the non-ferromagnetic material is connected in a form-fitting and/or force-fitting manner to the ferromagnetic material of the disc ring (15).

9. Bearing housing of an axial bearing (5) having at least two axially polarized permanent magnet rings (7) which are delimited on both sides by ferromagnetic pole discs (8) and which are arranged in a bearing housing (6) in such a way that poles in the same direction are opposite one another in the installed state, and each of the pole discs (8) has a vertically arranged axis (17) and an axis (16) which is arranged orthogonally with respect to the vertical axis (17), and a central opening (14) and a disc ring (15), according to one or more of the preceding claims, **characterized in that** the disc ring (15) has, in the vertical axis (17), on the inner circumference which adjoins the central opening (14)
- a sickle-shaped, wedge-shaped and/or trapezoidal-shaped bevel (12)
and/or
- a non-ferromagnetic material.

## Revendications

1. Palier de butée pour un rotor de filage (1) d'un dispositif à filage à bout libre, monté sans poussée axiale, en particulier dans un gousset de palier d'un palier de disque de support,
comportant un composant de palier statique qui comporte au moins deux anneaux magnétiques permanents (7) polarisés axialement, délimités des deux côtés par des disques polaires ferromagnétiques (8), lesquels sont disposés dans un boîtier de palier (6) de telle sorte que des pôles de même sens se font face à l'état monté, et
le composant de palier statique étant prévu en particulier pour coopérer en fonctionnement avec un composant de palier dynamique qui est formé par des âmes ferromagnétiques (4) disposées sur la tige de rotor (2) du rotor de filage (1) à l'écartement des disques polaires (8), chaque disque polaire (8) comportant un axe (17) disposé verticalement à l'état monté des disques polaires (8) et un axe (16) disposé orthogonalement à l'axe vertical (17) ainsi qu'une ouverture centrale (14) et un anneau de disque (15),
**caractérisé en ce que**
l'anneau de disque (15) présente dans l'axe vertical (17) sur le pourtour intérieur adjacent à l'ouverture centrale (14)
- un chanfrein (12) en forme de faucille, en forme de coin et/ou en forme de trapèze,
et/ou
- un matériau non ferromagnétique.

2. Palier de butée selon la revendication précédente, **caractérisé en ce que** le chanfrein (12) est unilatéral et/ou bilatéral.

3. Palier de butée selon une ou plusieurs des revendications précédentes, **caractérisé en ce que** la hauteur de l'ouverture centrale (14) dans la direction de l'axe vertical n'est pas égale à la largeur de l'ouverture centrale (14) dans la direction de l'axe horizontal.

4. Palier de butée selon une ou plusieurs des revendications précédentes, **caractérisé en ce que** le chanfrein (12) et/ou le matériau non ferromagnétique est réalisé à l'état monté des disques polaires (8) dans la moitié inférieure et/ou supérieure de l'anneau de disque (15).

5. Palier de butée selon une ou plusieurs des revendications précédentes, **caractérisé en ce que** le matériau non ferromagnétique est un matériau de palier à glissement, en particulier du plastique ou de la céramique.

6. Palier de butée selon une ou plusieurs des revendications précédentes, **caractérisé en ce que** le matériau non ferromagnétique est élastique et/ou monté de manière élastique.

7. Palier de butée selon une ou plusieurs des revendications précédentes, **caractérisé en ce que** l'anneau de disque (15) comporte une interruption (19) dans la direction de l'axe vertical (17).

8. Disque polaire dans un palier de butée selon une ou plusieurs des revendications précédentes, **caractérisé en ce que** le matériau non ferromagnétique est relié par complémentarité de forme et/ou de force au matériau ferromagnétique de l'anneau de disque (15).

9. Boîtier de palier d'un palier de butée (5) comportant au moins deux anneaux magnétiques permanents (7) polarisés axialement, délimités des deux côtés par des disques polaires ferromagnétiques (8), lesquels sont disposés dans un boîtier de palier (6) de telle sorte que des pôles de même sens se font face à l'état monté et chacun des disques polaires (8) comporte un axe (17) disposé verticalement et un axe (16) disposé orthogonalement à l'axe vertical (17) ainsi qu'une ouverture centrale (14) et un anneau de disque (15), selon une ou plusieurs des revendications précédentes, **caractérisé en ce que** l'anneau de disque (15) présente dans l'axe vertical (17) sur le pourtour intérieur adjacent à l'ouverture centrale (14)
- un chanfrein (12) en forme de faucille, en forme de coin et/ou en forme de trapèze,
et/ou
- un matériau non ferromagnétique.
